# EUROPEAN PATENT APPLICATION

(11) **EP 4 742 099 A1**
(43) Date of publication of application: **13.05.2026**
(21) Application number: 24306885.5
(22) Date of filing: 08.11.2024
(51) Int. Cl.: G06N 3/045, G06N 20/00

(54) **METHOD TO COMMUNICATE INTERMEDIATE DATA VALUES WITHOUT INTERMEDIATE DATA NAMES**

(71) Applicant: InterDigital CE Patent Holdings, SAS, 75017 Paris (FR)
(72) Inventor: FILOCHE, Thierry, 35410 Chateaugiron (FR); QUINQUIS, Cyril, 35520 Melesse (FR); ONNO, Stephane, 35760 Saint Gregoire (FR)
(74) Representative: Vossius & Partner Patentanwälte Rechtsanwälte mbB

(57) **Abstract**

In an example of a split-inferencing method, a first endpoint obtains information describing at least a first sub-model of a split-inferencing machine learning model. In communication with a second endpoint, a tensor sorting algorithm is selected from among a plurality of available tensor sorting algorithms. The first endpoint runs the first sub-model to obtain a plurality of tensors, and it sends the tensors to the second endpoint in an order determined by the selected tensor sorting algorithm. The tensors may be sent without tensor names. The second endpoint may interpret the tensors based on the selected tensor sorting algorithm and run the second sub-model.

## Description

### BACKGROUND

The present disclosure relates to machine learning (ML) models. New uses for machine learning models are constantly being developed. As the usefulness of such models increases, the computational complexity of those models continues to grow. It may be difficult to implement a complete machine learning model entirely on one computing device, particularly where the computing device is consumer level user equipment. The present disclosure thus relates to techniques in which an ML model is implemented partly on one endpoint (such as user equipment, UE) and partly on another endpoint (which may be a network entity), referred to as split inferencing.

### SUMMARY

Briefly stated, in one embodiment, a method comprises: at a first endpoint, obtaining information describing at least a first sub-model of a split-inferencing machine learning model; in communication with a second endpoint, selecting a tensor sorting algorithm from among a plurality of available tensor sorting algorithms; running the first sub-model to obtain a plurality of tensors; and sending the plurality of tensors to the second endpoint, wherein the plurality of tensors are sent in an order determined by the selected tensor sorting algorithm.

An apparatus according to some embodiments comprises one or more processors configured to perform at least: at a first endpoint, obtaining information describing at least a first sub-model of a split-inferencing machine learning model; in communication with a second endpoint, selecting a tensor sorting algorithm from among a plurality of available tensor sorting algorithms; running the first sub-model to obtain a plurality of tensors; and sending the plurality of tensors to the second endpoint, wherein the plurality of tensors are sent in an order determined by the selected tensor sorting algorithm.

In some embodiments, the first endpoint does not send names for the plurality of tensors to the second endpoint.

A method according to some embodiments comprises: at a second endpoint, obtaining information describing at least a second sub-model of a split-inferencing machine learning model; in communication with a first endpoint, selecting a tensor sorting algorithm from among a plurality of available tensor sorting algorithms; receiving a plurality of tensors from the first endpoint, wherein the plurality of tensors are received in an order determined by the selected tensor sorting algorithm; and running the second sub-model on the plurality of tensors.

An apparatus according to some embodiments comprises one or more processors configure to perform at least: at a second endpoint, obtaining information describing at least a second sub-model of a split-inferencing machine learning model; in communication with a first endpoint, selecting a tensor sorting algorithm from among a plurality of available tensor sorting algorithms; receiving a plurality of tensors from the first endpoint, wherein the plurality of tensors are received in an order determined by the selected tensor sorting algorithm; and running the second sub-model on the plurality of tensors.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 illustrates an architecture for a split inference between the UE (user equipment) and network, with the media data source in the UE.
FIG. 2 illustrates an architecture for a split inference between the UE (user equipment) and network, with the media data source in the network.
FIGs. 3A-3C illustrate a split inferencing model in which only one connection is present. FIG. 3A illustrates Part I, which is the sub-model used to initiate the inference on the EndPoint1 (e.g. UE). FIG. 3B illustrates Part II, which is the sub-model used to finalize the inference process on EndPoint2 (e.g. a network). FIG. 3C illustrates the topology of the entire model (with names removed for clarity of illustration).
FIGs. 4A-4D illustrate an example of a split inferencing model with two connections. FIG. 4A illustrates Part I. FIG. 4B and 4C together illustrate Part II. FIG. 4D illustrates the complete model topology (with names removed for clarity of illustration).
FIG. 5 illustrates a split inference architecture that may be used to implement a method in which intermediate tensor data is sent without including tensor names.
FIG. 6 is a call flow diagram illustrating a negotiation method performed in some embodiments.
FIG. 7 is a call flow diagram illustrating a negotiation method performed in other embodiments.
FIG. 8 is a call flow diagram illustrating an inference loop method performed in some embodiments.
FIG. 9 provides an overview of the topology of an ML model used in some embodiments. For clarity of illustration, most nodes are not labelled.
FIG. 10 illustrates Submodel I based on the model of FIG. 8 split at the node with index 5.
FIG. 11 illustrates Submodel II based on the model of FIG. 8 split at the node with index 5.
FIG. 12 illustrates an example of outputs of a first sub-model as used in tensor sorting according to some embodiments
FIG. 13 illustrates the inputs of a second sub-model as used in tensor sorting according to some embodiments.
FIG. 14 is a call flow diagram illustrating implementation of split inferencing in a 3GPP framework.
FIG. 15 is a functional block diagram of an apparatus on which some embodiments may be implemented.
FIG. 16 is a schematic illustration representing the preservation of the order of tensors during transmission of tensor data.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

### Overview of Split Inferencing of a Trained Model

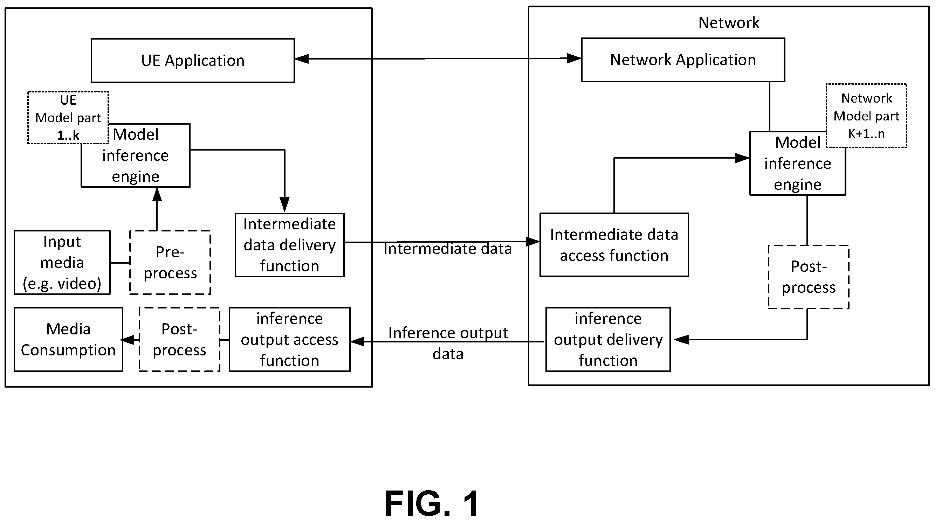

FIG. 1 provides an overview of an architecture (3GPP SA4 AI4media) for split inferences of a model composed of n layers or nodes (1..n) between the network and a user equipment (UE), where a first inference implemented on a first endpoint processes first part of the model, i.e. layers 1..k, and the second inference implemented on a second endpoint processes the second part of the model, i.e. layers k+1..n. The architecture shows the delivery and access functions of intermediate data between the UE and the network when the media data source originates from the UE. The first part of the inference is then performed in the UE and the second part in the network. The resulting output data is finally sent back to the UE.

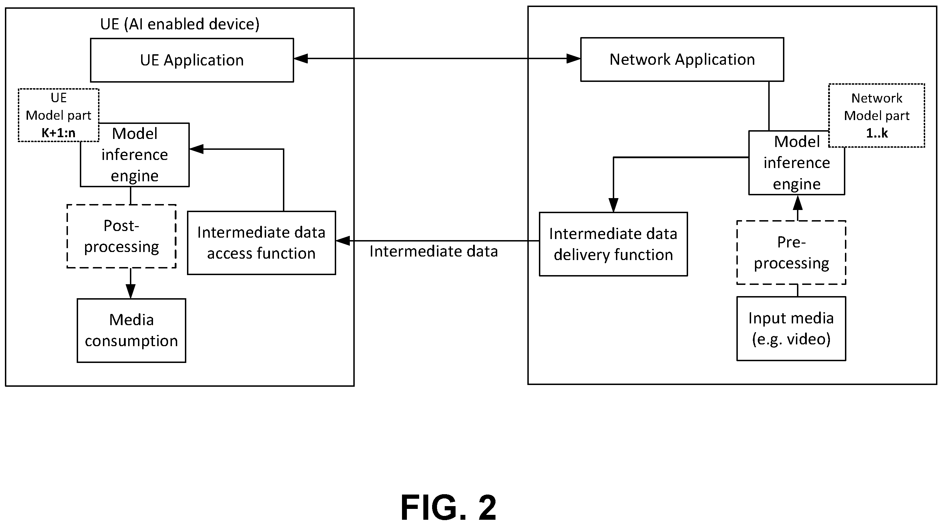

In another configuration, illustrated in FIG. 2, the media data source comes from the network, then the first part of the AI model is performed on the network side and the second part on the UE. Example embodiments herein may be implemented using either configuration.

A pre-processing is used to adapt the input media data to the input inference. Conversely, a post-processing is used to adapt the output results data of the inference to the media consumption.

In the present disclosure, the terms "layers" or "nodes" may be used interchangeably. Among those skilled in the art, the term "layers" is used more often in frameworks like Tensorflow, while "nodes" tends to be used with reference to the ONNX framework. The term "branch" refers to the entity that links two nodes or two layers e.g. the output of a node/layer A that is the input of node/layer B.

### Branch splitting

Artificial intelligence (Al) and/or machine learning (ML) model architectures have various different structures and different levels of complexity. A neural network can include thousand or millions of nodes. Each node is connected with at least another node. In case of multiple connections, the split operation applies on multiple branches. In case of a simple connection, the split operation applied on a single branch.

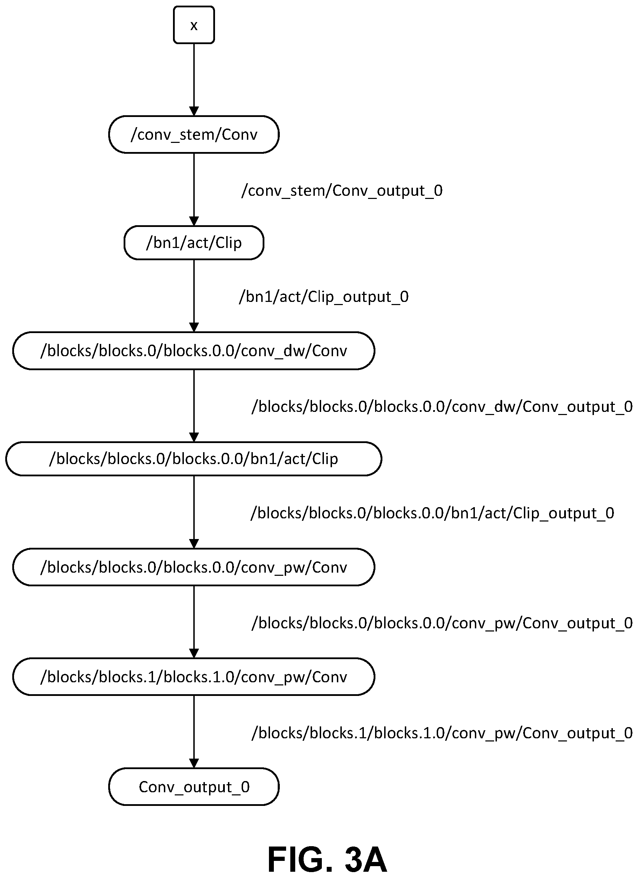

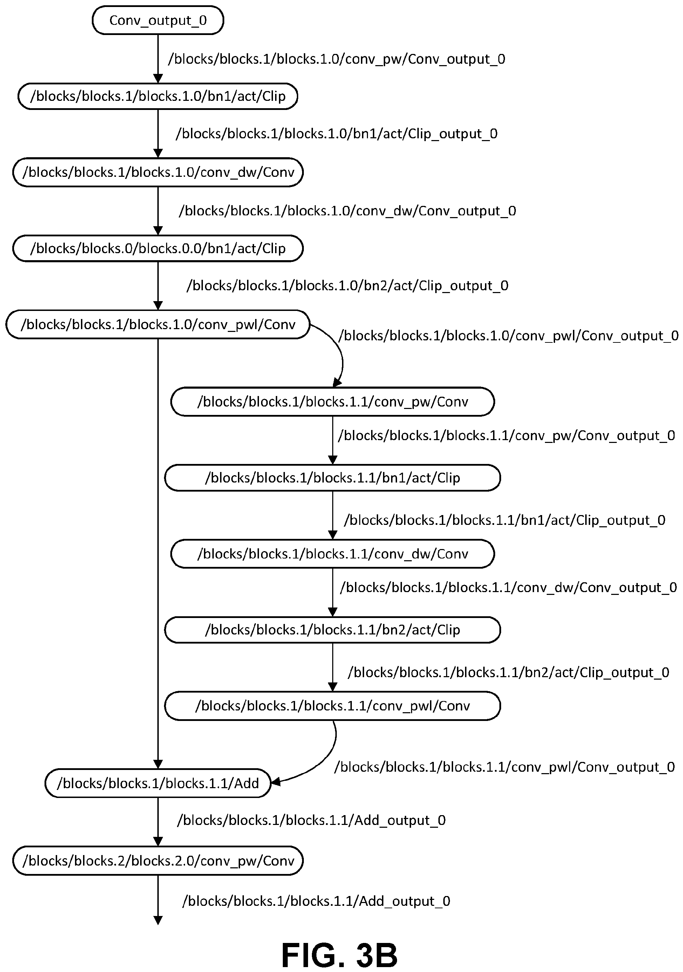

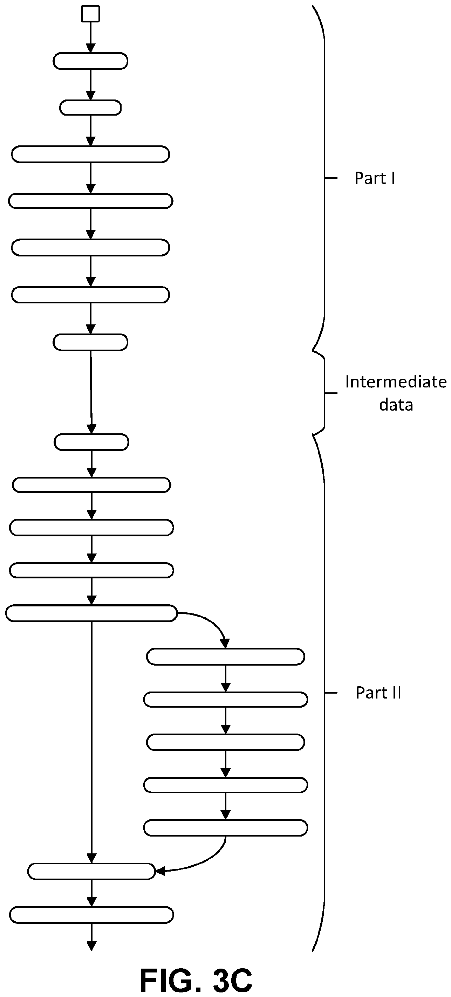

**Single-branch split.** FIGs. 3A-3C show a representation of the efficientnet_lite0_Opset16.onnx model which was split at the node numbered "node 10" in the numbering scheme of that model, where only one connection is present. FIG. 3A illustrates Part I, which is the sub-model used to initiate the inference on the EndPoint1 (e.g. UE). FIG. 3B illustrates Part II, which is the sub-model used to finalize the inference process on EndPoint2 (e.g. Network). FIG. 3C illustrates the topology of the entire model (with names removed for clarity of illustration). The name of the "node 10" output is "/blocks/blocks.1/blocks.1.0/conv_pw/Conv_output_0" with short name "Conv_output_0". This branch name is used to identify the intermediate data which are sent from EndPoint1 (e.g. UE) to EndPoint2 (e.g. Network).

The intermediate data delivery function associates intermediate data with node I/O naming, e.g. "/blocks/blocks.1/blocks.1.0/conv_pw/Conv_output 0".

The intermediate data access function parses the intermediate data packet, retrieves the node I/O naming, e.g. branch "/blocks/blocks.1/blocks.1.0/conv_pw/Conv_output_0" and can route the intermediate data to the ad-hoc layer in the model inference engine.

**Multibranch split.** For some models, or some parts of a model, a node is connected to several nodes for its input, and/or several nodes for its output. A split made at a such node is called a multibranch split. The result is several tensors that encapsulate intermediate data.

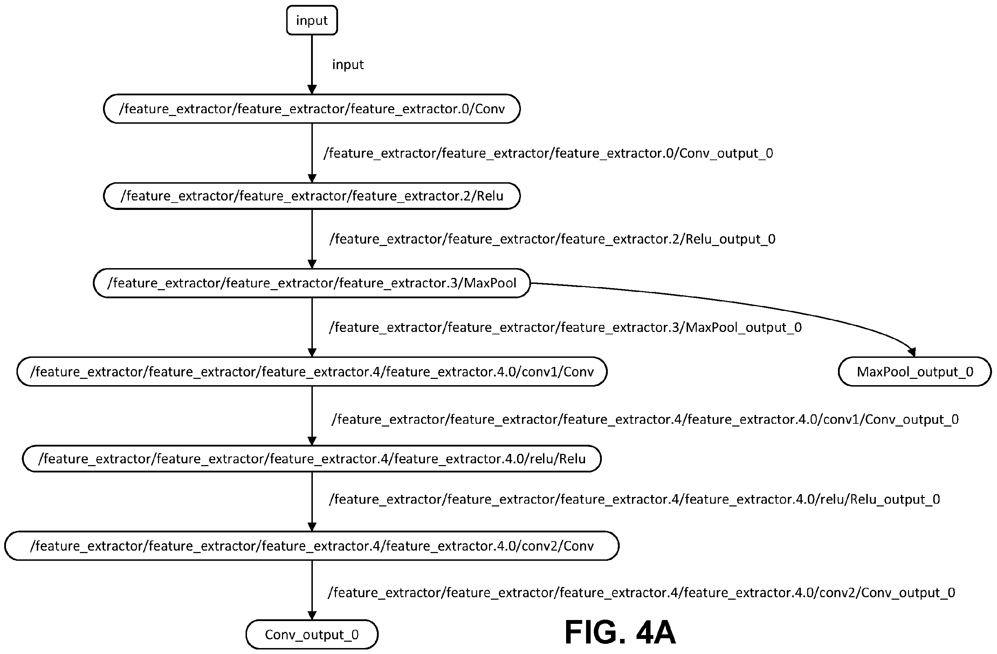

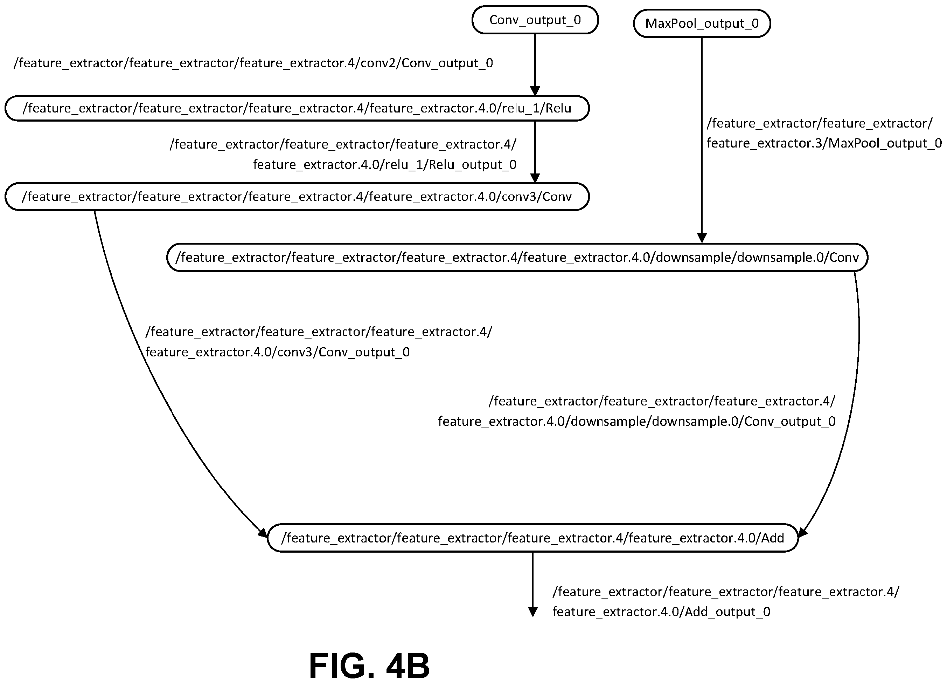

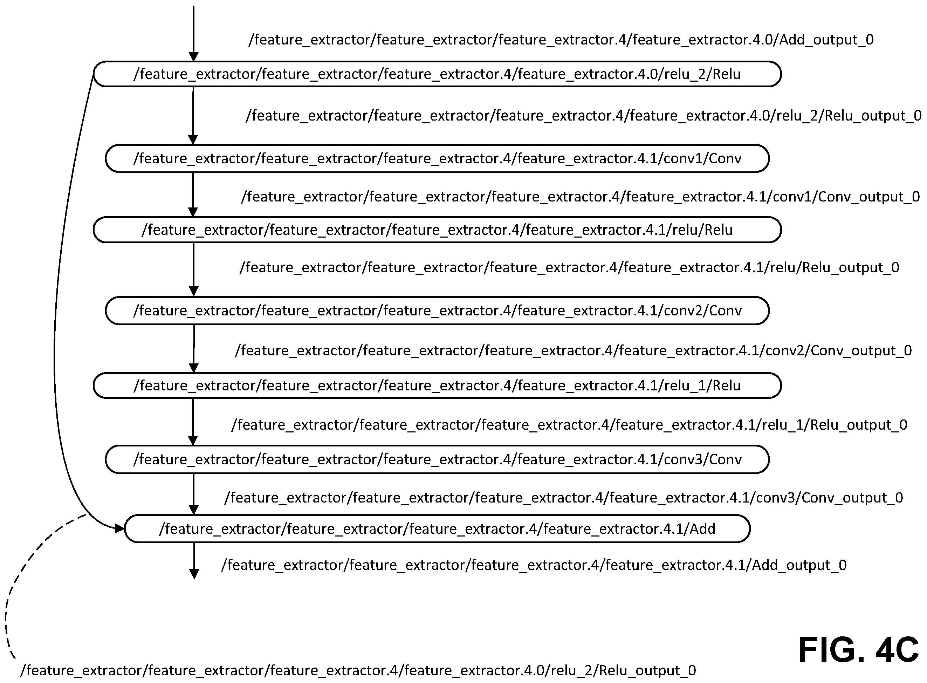

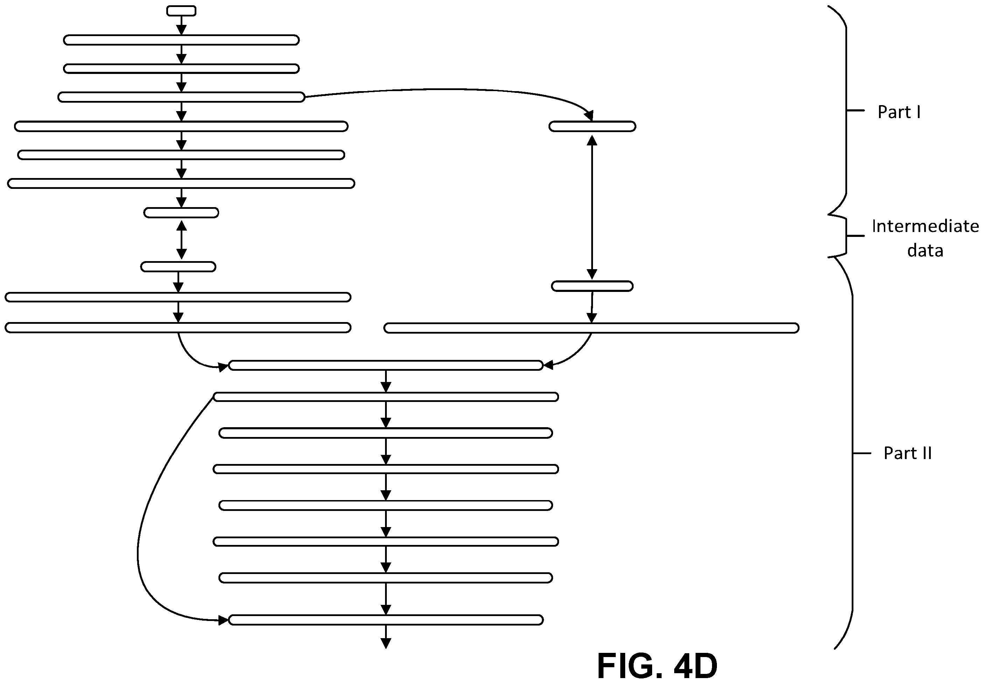

FIGs. 4A-4D illustrate an example of the resnet model split at node 6 into Part I and Part II. FIG. 4A illustrates Part I. FIG. 4B and 4C together illustrate Part II. FIG. 4D illustrates the complete model topology (with names removed for clarity of illustration). The split is made of two branches:
- one branch from "node 6"
   ("/feature_extractor/feature_extractor/feature_extractor.4/feature_extractor.4.0/conv2 /Conv") to node 7 with branch name
   '7feature_extractor/feature_extractor/feature_extractor.4/feature_extractor.4.0/conv2/ Conv_output_0"",
- and one branch from "node 3"
   ("/feature_extractor/feature_extractor/feature_extractor.3/MaxPool") to "node 9" with branch name
   "/feature_extractor/feature_extractor/feature_extractor.3/MaxPool_output_0".

Tensors and intermediate data are conventionally identified with the branch naming, ["/feature extractor/feature extractor/feature_extractor.4/feature_extractor.4.0/conv2/Conv_ output_0" , "/feature extractor/feature_extractor/feature_extractor.3/MaxPool_output 0"].

The intermediate data delivery function combines intermediate data with branch naming.

The intermediate data access function parses the intermediate data packet, retrieves the branch naming and can route the intermediate data to the EndPoint2.

### Overview of the ONNX format

ONNX is an open format built to represent machine learning models. ONNX defines a common set of operators - the building blocks of machine learning and deep learning models - and a common file format to enable AI developers to use models with a variety of frameworks, tools, runtimes, and compilers.

ONNX may be used to describe a computational graph. The model itself is organized in graph, in a tree-like way (e.g. an ONNX model may be load as onnx_model = onnx.load(onnx model_name)).

Inputs of a model are available as a list of string (e.g. onnx_model.graph.input).

Outputs of a model are available as a list of string (e.g. onnx_model.graph.output).

Each machine learning operation is represented by a "node".

All nodes are available through a list (e.g. onnx_model.graph.node)

Each node has following properties:
- node.name: a string that identifies this node
- node.input: a list of string that represent tensor name expected by the node
- node.output: a list of string that represent tensor name generated by the node
- node.op_type: a string that identifies the operation of the node

Running an inference with an ONNX model conventionally involves passing a dictionary containing the association tensor name / tensor value, such as the following example, in which the tensor names are the names of the input tensors of the model.

```
 { «tensor_name_1»: tensor_value_1,
 «tensor_name_2»: tensor_value_2,
 ...
 «tensor_name_n»: tensor_value_n
 }
```

### Overview of issues addressed in some embodiments

An application running on a UE (user equipment) may make use of an AI/ML model M to infer information regarding pictures, videos, texts, audio sequences, or other types of input data. For various reasons, like local constraints on memory and/or energy limitations, it may be desirable for the inference process to be distributed between an EndPoint1 (which may be a UE) and an EndPoint2 (which may be a network). Thus, on EndPoint1 the application downloads or otherwise obtains a sub-model M1 which is a sub-part of M, while EndPoint2 (Network) downloads or otherwise obtains the corresponding sub-model M2. M1 and M2 have at least one input, and at least one output.

M1 and M2 are two sub-models that constitute model M. By working together, they mimic the M inference process in the sense that they provide the same functionality with the same results in terms of accuracy or score.

The inference is thus distributed between M1 and M2. Intermediate data of the M1 inference results are communicated from the first endpoint to the second endpoint, where the second endpoint completes the inference. A conventional way to transmit these intermediate data is to communicate "tensor values" labelled with a "tensor name" that identifies the tensor to which the values are applicable.

### Overview of example embodiments

Example embodiments eliminate the overhead of transmitting a tensor name by communicating only tensor values. In case of multibranch split, intermediate data contain several tensors. Communicating only "tensor values" creates a problem at the reception at the second endpoint in a case where the second endpoint does not have information indicating which tensor is associated with which received tensor values. Example embodiments address this issue by providing information that can be used at the second endpoint to determine which tensor is associated with which received tensor values. Some embodiments include a negotiation phase in which a first endpoint and a second endpoint negotiate a sorting method supported by both endpoints. This negotiation may also occur during an inference loop phase.

Example embodiments further include an inference loop phase. In an example inference loop phase, a first endpoint infers a first part of the model resulting in intermediate data. The first endpoint selects a sorting method. The first endpoint sends the intermediate data values to the second endpoint following the selected sorting method. The second endpoint receives the intermediate data values. According to the agreed sorting method received in the negotiation phase, the second endpoint retrieves the tensor names associated to each of the tensor values and infers the second part of the model.

In different embodiments, a list or table of sorting methods may be exchanged at the negotiation phase may be provided using different means. A predefined table of sorting method may also be used.

### Encoding and decoding algorithms

With ONNX models for example, ONNX graphs are in the form of a DAG (Direct Acyclic Graph). Consequently, all nodes are sequentially listed in a unique way. In addition, for each node, all outputs of the nodes are also listed in a unique way. It is therefore possible to order all node's output in a unique way and associate a unique rank at each tensor. In example embodiments, the order of tensors of the intermediate data is maintained during the transmission.

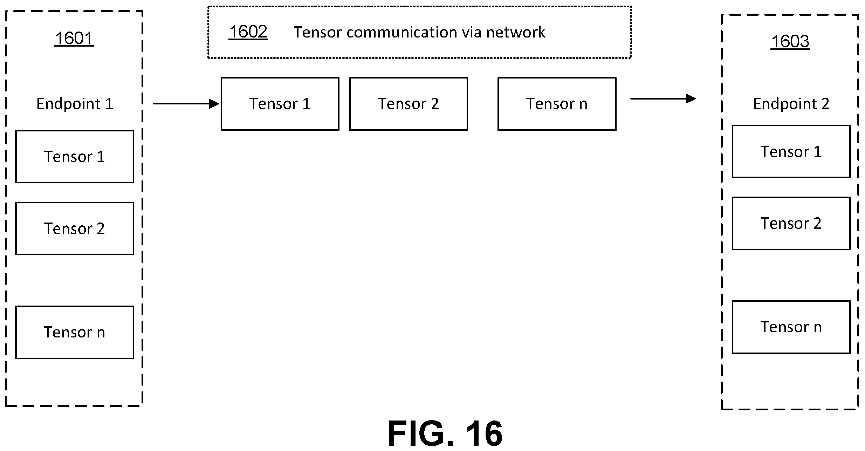

In example embodiments, the transmission of tensors is performed using a technique that includes a mechanism (such as serialization, marker, specific protocol, or other means) to send tensors from a first endpoint and be able at the second endpoint to receive each tensor with the right shape and size. An example is schematically illustrated in FIG. 16. At 1601, after inference on endpoint 1, the endpoint one communicates tensors to the second endpoint in a specific order. At 1602, on the network, the tensors are transmitted by keeping the original order. At 1603, the endpoint 2 receives the tensors with the right size and shape, and with the same order as the one of endpoint 1.

**First endpoint sorting by rank.** In some embodiments, tensor values are transmitted in the order determined by the rank of the tensors in the model. The receiver retrieves the tensor names thanks to both the split point number and the rank of the tensors. For example, in the example of FIGs. 4A-4D, the split is made at a split point identified by the index 6 within that model. The tensors of the intermediate data are the following tensors.
Tensor1="/feature_extractor/feature_extractor/
   feature_extractor.4/feature_extractor.4.0/conv2/Conv_output_0",
Tensor2="/feature extractor/feature extractor/
   feature_extractor.3/MaxPool_output_0"

In an example, the "Tensor1" has rank "rᵢ", and "Tensor 2" has rank "rⱼ" with "rᵢ"< "rⱼ". It should be noted that the term "rank" used herein refers to the ordinal position of a tensor (e.g. first, second, third etc.) among the tensors used in a model, rather than the tensor rank in the sense of tensor rank decomposition as used in linear algebra.

In this example, the tensor values of the intermediate data are sorted in the following order.

### [tensor value of tensor1 , tensor value of tensor2]

The following is an example of a method, expressed as pseudocode, that may be implemented at a first endpoint to sort tensors following a rank of the tensor in the model. This pseudocode may run either on the full model, or on submodel I. For sake of simplicity, the full model or submodel I is called "M1" on the pseudo code below.

At the negotiation phase:
- Input: model M1 with nodes nᵢ having output oⱼ
- Create an empty list L_tensors
- For all nodes nᵢ of the model M1:
   o For all outputs oⱼ of node nᵢ
      ▪ add oⱼ output name to L_tensors
- L_tensors contains the list of tensors sorted by their rank in the model

At the inference loop phase:
- Sort the tensors of intermediate data ((name_1, value_1), ..., (name_p, value_p)) ordered by following the same order as with the list L_tensors
- Send only the tensor values of the sorted intermediate data in the same order than in the sorted intermediate data

**First endpoint sorting by alphabetical order.** In some embodiments, tensors are provided in alphabetical order. The following is a method, represented by pseudocode, that may be used on a first endpoint to sort tensors following their alphabetical order

At the inference loop phase:
- Sort the tensors of intermediate data ((name_1, value_1), ..., (name_p, value_p)) ordered by alphabetical order of their tensor names
- Send only the tensor values of the sorted intermediate data in the same order than in the sorted intermediate data

**First endpoint sorting by order of the first submodel.** In some embodiments, tensors are provided using the order of the first submodel. The following method, represented here by pseudocode that may run on a first endpoint, sorts tensors following the same order as the output order of the first submodel.

At the negotiation phase:
- Input: submodel M1 with nodes nᵢ having output oⱼ; M1 is the first submodel of a model M splitted in submodels M1, M2 using the agreed split point
- Get the list L_tensors all output tensors of the submodel M1 (see Note below)

At the inference loop phase:
- Sort the tensors of intermediate data ((name_1, value_1), , (name_p, value_p)) ordered by using order of the tensors in the sorted list L_tensors
- Send only the tensor values of the sorted intermediate data in the same order than in the sorted intermediate data

Note: The list L_tensor may be obtained either by reading the inputs of the submodel M1, reading the inputs of the model M, or by following this pseudo-code:
At the negotiation phase:
- Create an empty list L_tensors
- For all nodes nᵢ of the submodel M1:
   ∘ For all outputs oⱼ of node nᵢ
      ▪ If outputs oⱼ is an output of the submodel M1
         - Add oⱼ output name to L_tensors
- L_tensor contains the list of all output tensors of the submodel M1

**First endpoint sorting by input order of the second submodel.** In some embodiments, a method may be used by a first endpoint as described in the following pseudocode to sort tensors following the same order as the inputs order of the second submodel.

At the negotiation phase:
- Input: submodel M2 with nodes nᵢ having output oⱼ; M2 is the second submodel of a model M splitted in submodels M1, M2 using the agreed split point
- Get the list L_tensor all input tensors of the submodel M2

At the inference loop phase:
- Sort the tensors of intermediate data ((name_1, value_1), ..., (name_p, value_p)) ordered by using order of the tensors in the sorted list L_tensors
- Send only the tensor values of the sorted intermediate data in the same order than in the sorted intermediate data

**Second endpoint decoding tensors sorted by tensor rank.** In some embodiments, a second endpoint may implement a method as shown in the following pseudocode to decode a global unique reference to retrieve the original tensor name.

At the negotiation phase:
- Input: model M1 with nodes nᵢ having output oⱼ
- Create an empty list L_tensors
- For all nodes nᵢ of the model M1:
- For all outputs oⱼ of node nᵢ
   ∘ add oⱼ output name to L_tensors
- L_tensors contains the list of tensors sorted by their rank in the model

At the inference loop phase:
- Using the split point number, retrieve the list of tensors associated to this split point
- Using L_tensors, sort the expected list of tensors of intermediate data following the same order as in L_tensors
- Associate each tensor value received at each tensor of the above sorted list

**Second endpoint decoding tensors sorted by alphabetical order.** In some embodiments, a second endpoint may implement a method as shown in the following pseudocode to decode a global unique reference to retrieve the original tensor name in a case where tensors were sorted by alphabetical order.

At inference loop step:
- Get the list of tensors names of the intermediate data. This may be by splitting algorithm that retrieve the names of the intermediate data, or simply by reading the input names of the model
- Sort the list of tensors names of intermediate data by alphabetical order
- Associate each tensor value received at each tensor of the above sorted list

**Second endpoint decoding tensors sorted by outputs of first submodel.** In some embodiments, a second endpoint may implement a method as shown in the following pseudocode to decode a global unique reference to retrieve the original tensor name in a case where tensors were sorted by the order of outputs of the first submodel.

At the negotiation phase:
- Use the corresponding sorting pseudocode described above with respect to the first endpoint to get the list L_tensors of ouputs of the first submodel.

At the inference phase:
- Associate each tensor value received at each tensor of the above sorted list

**Second endpoint decoding tensors sorted by inputs of second submodel.** In some embodiments, a second endpoint may implement a method as shown in the following pseudocode to decode a global unique reference to retrieve the original tensor name in a case where tensors were sorted by the order of inputs of the second submodel.

At the negotiation phase:
- Use the corresponding sorting pseudocode described above with respect to the first endpoint to get the list L_tensors of ouputs of the first submodel.

At the inference loop phase:
- Associate each tensor value received at each tensor of the above sorted list

### Example architecture

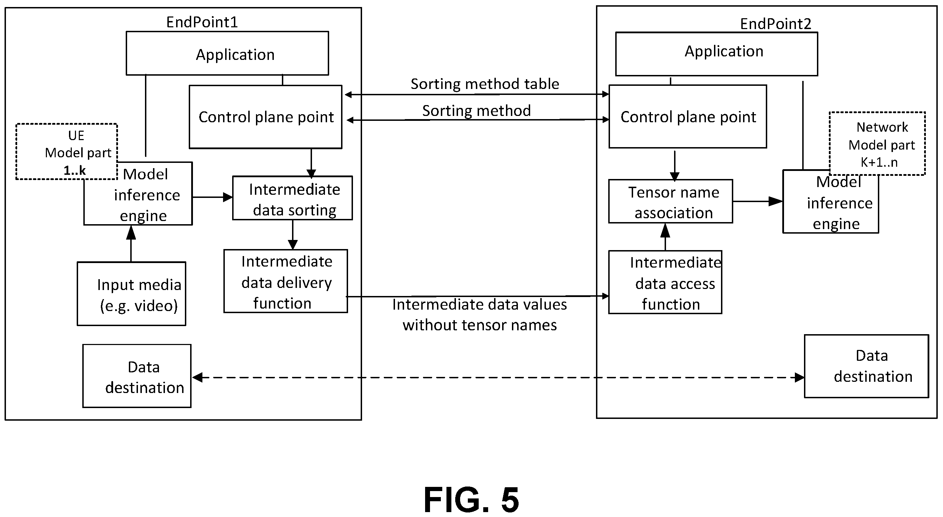

FIG. 5 is a functional block diagram illustrating an example architecture of a split rendering system on which some embodiments may be implemented. In some such embodiments, a sorting method is negotiated between the first and second endpoints, and intermediate data is transmitted without tensor names.

### Negotiation and setup

In example embodiments, both endpoints exchange information on the split point, e.g. information indicating the layer or node where the inference ends on the first endpoint and where it starts on the second endpoint. The negotiation phase aims at defining which sorting method will be used to sort the tensor values of the intermediate data.

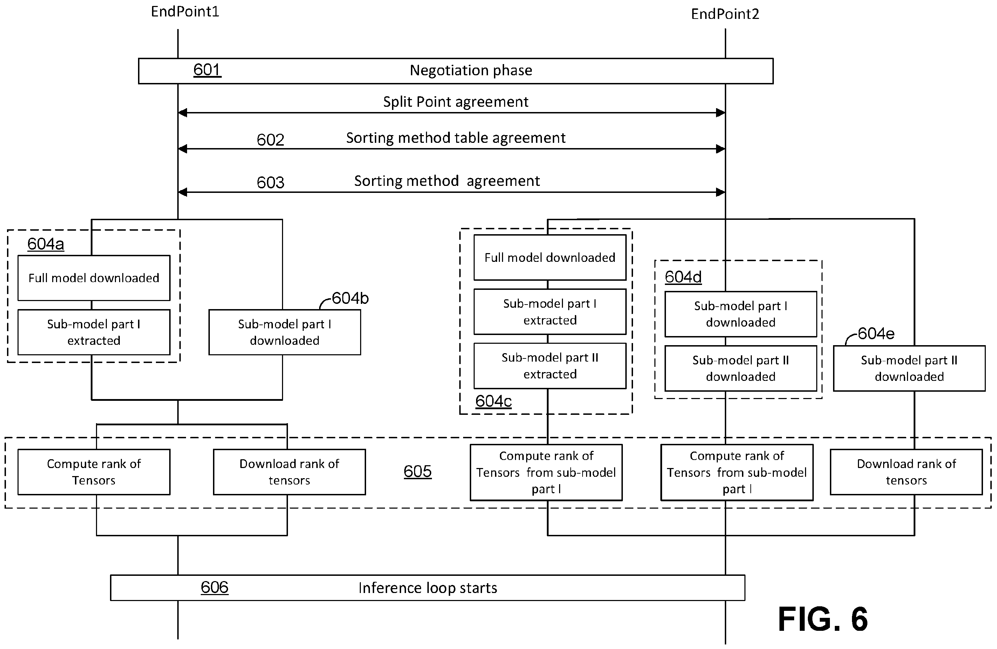

FIG. 6 is a call flow diagram illustrating an example of a negotiation phase in an embodiment in which tensors are sorted by rank. At 601, the negotiation phase has started and both parties, EndPoint1 and EndPoint2 agree on a split point. At 602, EndPoint1 and EndPoint2 agree on sorting method table (see Table 1, below). At 603, EndPoint1 and EndPoint2 agree on a sorting method. EndPoint 1 and EndPoint 2 obtain sub-models with different possible ways. At 604a, EndPoint1 downloads the full model and extracts the sub-model part I. Alternatively, at 604b, EndPoint1 downloads the sub-model part I.

At 604c, EndPoint2 downloads the full model and extracts the sub-model part I and sub-model part II. Alternatively, at 604d, EndPoint2 downloads the full model and extracts the sub-model part II. Alternatively, at 604e, EndPoint2 downloads the sub-model part II.

At 605, if the solution is based on the rank of tensors in the model, each endpoint either computes the rank of tensors from the sub-model part I, or downloads it. At 606, each endpoint has obtained its sub-model (sub-model part I for EndPoint1, sub-model part II for EndPoint2) and has information indicating which sorting method will be used, and the inference loop may start.

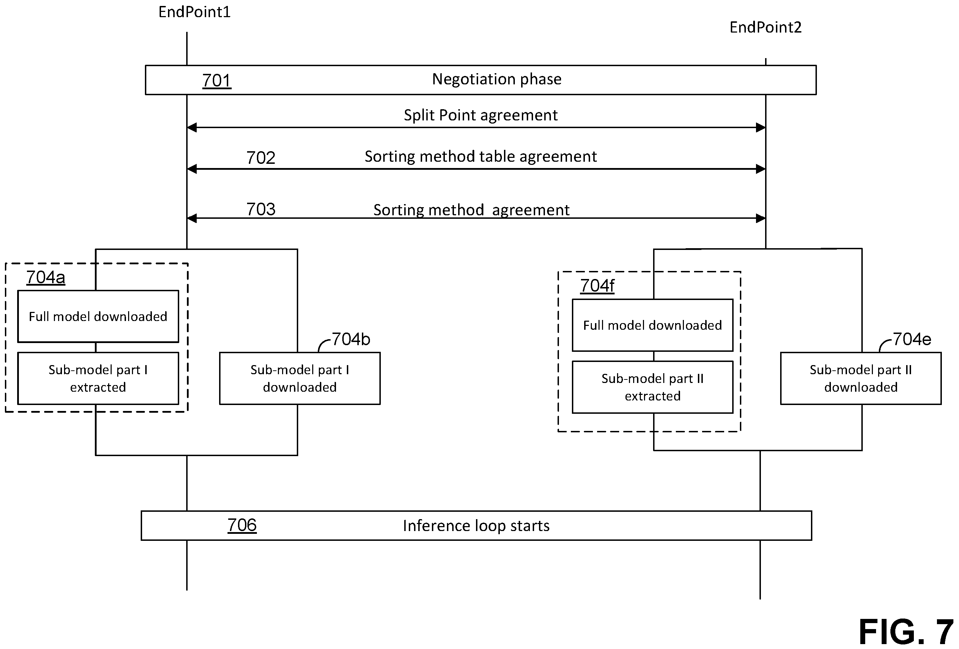

FIG. 7 is a call flow diagram illustrating an example of a negotiation phase in an embodiment in which tensors are sorted by a technique other than rank. At 701, the negotiation phase has started and both parties, EndPoint1 and EndPoint2 agree on a split point. At 702, EndPoint1 and EndPoint2 agree on sorting method table (see Table 1, below). At 703, EndPoint1 and EndPoint2 agree on a sorting method. EndPoint 1 and EndPoint 2 obtain sub-models with different possible ways. At 704a, EndPoint1 downloads the full model and extracts the sub-model part I. Alternatively, at 704b, EndPoint1 downloads the sub-model part I.

At 704e, EndPoint2 downloads the sub-model part II. Alternatively, at 704f, EndPoint2 downloads the full model and extracts the sub-model part II.

At 706, each endpoint has obtained its sub-model (sub-model part I for EndPoint1, sub-model part II for EndPoint2) and has information indicating which sorting method will be used, and the inference loop may start.

In an example embodiment, a sorting table may have the form as shown in Table 1.

**Table 1: sorting method table**

| Sorting method identifier | Description |
|---|---|
| 0 | Only tensor values are sent ordered by rank of the tensor in the model |
| 1 | Only tensor values are sent ordered by alphabetical order of the tensor names |
| 2 | Only tensor values are sent ordered by rank of the tensor in the output of the part I of the model (i.e. the sub-model run by the EndPoint1) |
| 3 | Only tensor values are sent ordered by rank of the tensor in the input of the part II of the model (i.e. the sub-model run by the EndPoint2) |

In some embodiments, the information of a sorting method table such as Table 1 may be available in advance to both endpoints e.g. through standardization or through an out-of-band communication. In other embodiments, the sorting method table may be exchanged between the endpoints during the negotiation.

### Example inference loop

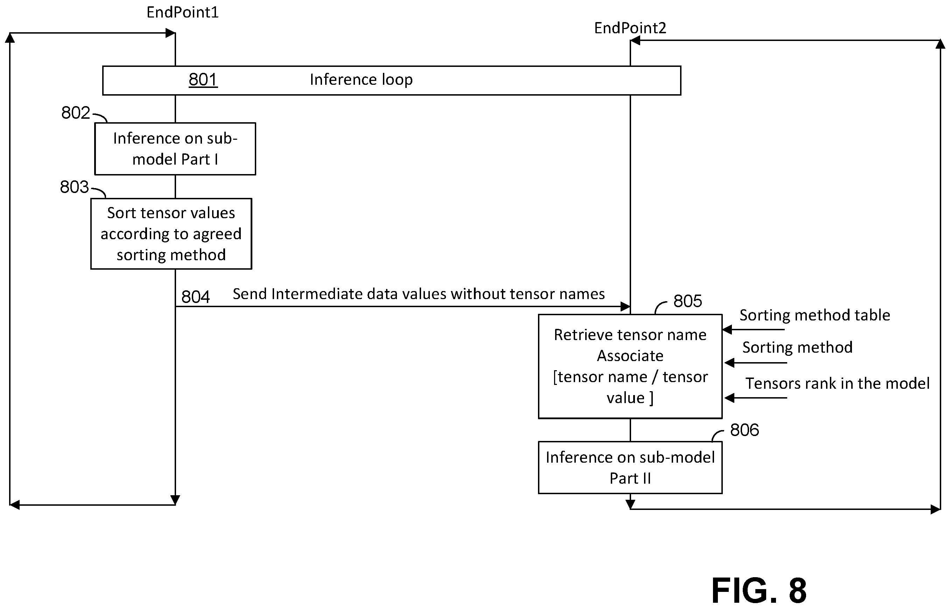

FIG. 8 illustrates an example of an inference loop that may be implemented in some embodiments. In this phase, the inference process is run, and intermediate data are sent from EndPoint1 to EndPoint2.

Reference 801 indicates that the inference loop is running. At 802, on EndPoint1, the inference process applies on sub-model Part I and generates intermediate data. At 803, on EndPoint1, intermediate data is sorted using the sorting method that was agreed on in the negotiation phase. At 804, intermediate data values are sent from EndPoint1 to EndPoint 2. The order of tensors of the intermediate data is maintained during the transmission. At 805, EndPoint2 receives the intermediate data values and, according to the agreed-upon sorting method, retrieves the tensor names associated to each tensor value. At 806, on EndPoint2, the inference process is applied on sub-model Part II.

### Illustration with an existing model

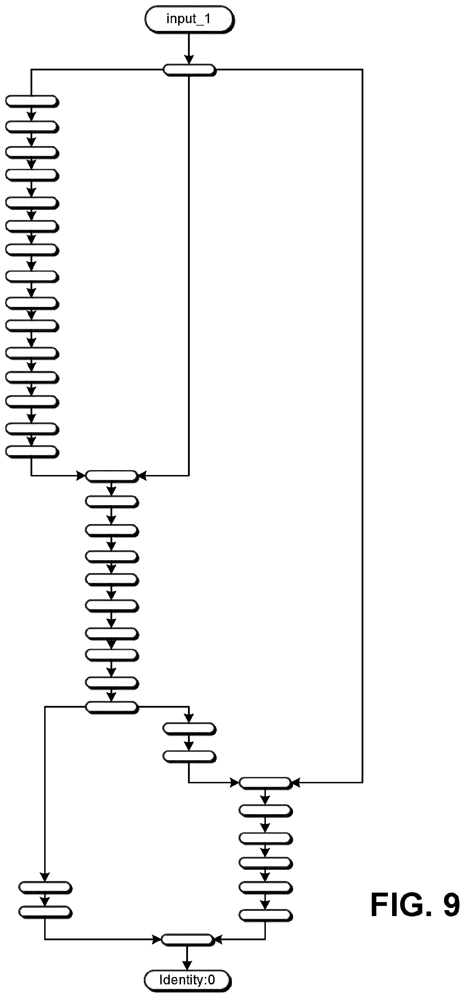

An example embodiment is illustrated here with respect to an existing Nerf (neural radiance field) model. FIG. 9 provides an overview of the topology of the model (for clarity of illustration, most nodes are not labelled).

The following table provides a list of the indices and names of all nodes in the model.

| Node index | Node name | |
|---|---|---|
| 0 | StatefulPartitionedCall/StatefulPartitionedCall/ | |
| | | tf_op_layer_split/PartitionedCall/split |
| 1 | StatefulPartitionedCall/StatefulPartitionedCall/ | |
| | | dense/StatefulPartitionedCall/MatMul |
| 2 | StatefulPartitionedCall/StatefulPartitionedCall/ | |
| | | dense/StatefulPartitionedCall/BiasAdd |
| 3 | StatefulPartitionedCall/StatefulPartitionedCall/ | |
| | | dense/StatefulPartitionedCall/re_lu/Relu |
| 4 | StatefulPartitionedCall/StatefulPartitionedCall/ | |
| | | dense_1/StatefulPartitionedCall/MatMul |
| 5 | StatefulPartitionedCall/StatefulPartitionedCall/ | |
| | | dense_1/StatefulPartitionedCall/BiasAdd |
| 6 | StatefulPartitionedCall/StatefulPartitionedCall/ | |
| | | dense_1/StatefulPartitionedCall/re lu/Relu |
| 7 | StatefulPartitionedCall/StatefulPartitionedCall/ | |
| | | dense_2/StatefulPartitionedCall/MatMul |
| 8 | StatefulPartitionedCall/StatefulPartitionedCall/ | |
| | | dense_2/StatefulPartitionedCall/BiasAdd |
| 9 | StatefulPartitionedCall/StatefulPartitionedCall/ | |
| | | dense_2/StatefulPartitionedCall/re_lu/Relu |
| 10 | StatefulPartitionedCall/StatefulPartitionedCall/ | |
| | | dense_3/StatefulPartitionedCall/MatMul |
| 11 | StatefulPartitionedCall/StatefulPartitionedCall/ | |
| | | dense_3/StatefulPartitionedCall/BiasAdd |
| 12 | StatefulPartitionedCall/StatefulPartitionedCall/ | |
| | | dense_3/StatefulPartitionedCall/re_lu/Relu |
| 13 | StatefulPartitionedCall/StatefulPartitionedCall/ | |
| | | dense_4/StatefulPartitionedCall/MatMul |
| 14 | StatefulPartitionedCall/StatefulPartitionedCall/ | |
| | | dense_4/StatefulPartitionedCall/BiasAdd |
| 15 | StatefulPartitionedCall/StatefulPartitionedCall/ | |
| | | dense_4/StatefulPartitionedCall/re_lu/Relu |
| 16 | StatefulPartitionedCall/StatefulPartitionedCall/ | |
| | | tf_op_layer_concat/PartitionedCall/concat |
| 17 | StatefulPartitionedCall/StatefulPartitionedCall/ | |
| | | dense_5/StatefulPartitionedCall/MatMul |
| 18 | StatefulPartitionedCall/StatefulPartitionedCall/ | |
| | | dense_5/StatefulPartitionedCall/BiasAdd |
| 19 | StatefulPartitionedCall/StatefulPartitionedCall/ | |
| | | dense_5/StatefulPartitionedCall/re_lu/Relu |
| 20 | | StatefulPartitionedCall/StatefulPartitionedCall/ |
| | | dense_6/StatefulPartitionedCall/MatMul |
| 21 | StatefulPartitionedCall/StatefulPartitionedCall/ | |
| | | dense_6/StatefulPartitionedCall/BiasAdd |
| 22 | StatefulPartitionedCall/StatefulPartitionedCall/ | |
| | | dense_6/StatefulPartitionedCall/re_lu/Relu |
| 23 | StatefulPartitionedCall/StatefulPartitionedCall/ | |
| | | dense_7/StatefulPartitionedCall/MatMul |
| 24 | StatefulPartitionedCall/StatefulPartitionedCall/ | |
| | | dense_7/StatefulPartitionedCall/BiasAdd |
| 25 | StatefulPartitionedCall/StatefulPartitionedCall/ | |
| | | dense_7/StatefulPartitionedCall/re_lu/Relu |
| 26 | StatefulPartitionedCall/StatefulPartitionedCall/ | |
| | | dense_8/StatefulPartitionedCall/MatMul |
| 27 | StatefulPartitionedCall/StatefulPartitionedCall/ | |
| | | dense_9/StatefulPartitionedCall/MatMul |
| 28 | StatefulPartitionedCall/StatefulPartitionedCall/ | |
| | | dense_8/StatefulPartitionedCall/BiasAdd |
| 29 | StatefulPartitionedCall/StatefulPartitionedCall/ | |
| | | dense_9/StatefulPartitionedCall/BiasAdd |
| 30 | StatefulPartitionedCall/StatefulPartitionedCall/ | |
| | | tf_op_layer_concat_1/PartitionedCall/concat_1 |
| 31 | StatefulPartitionedCall/StatefulPartitionedCall/ | |
| | | dense_10/StatefulPartitionedCall/MatMul |
| 32 | StatefulPartitionedCall/StatefulPartitionedCall/ | |
| | | dense_10/StatefulPartitionedCall/BiasAdd |
| 33 | StatefulPartitionedCall/StatefulPartitionedCall/ | |
| | | dense_10/StatefulPartitionedCall/re_lu/Relu |
| 34 | StatefulPartitionedCall/StatefulPartitionedCall/ | |
| | | dense_11/StatefulPartitionedCall/MatMul |
| 35 | StatefulPartitionedCall/StatefulPartitionedCall/ | |
| | | dense_11/StatefulPartitionedCall/BiasAdd |
| 36 | StatefulPartitionedCall/StatefulPartitionedCall/ | |
| | | tf_op_layer_concat_2/PartitionedCall/concat_2 |

The following table identifies the output tensor rank of all nodes of the model.

| Node rank | Output tensor rank | | |
|---|---|---|---|
| 0 | **0** | **StatefulPartitionedCall/StatefulPartitionedCall/** | |
| | | | **tf_op_layer_split/PartitionedCall/split:0** |
| 0 | **1** | **StatefulPartitionedCall/StatefulPartitionedCall/** | |
| | | | **tf_op_layer_split/PartitionedCall/split:1** |
| 1 | 2 | StatefulPartitionedCall/StatefulPartitionedCall/ | |
| | | | dense/StatefulPartitionedCall/MatMul:0 |
| 2 | **3** | **StatefulPartitionedCall/StatefulPartitionedCall/** | |
| | | | **dense/StatefulPartitionedCall/BiasAdd:0** |
| 3 | 4 | Statefu IPartition edCall/StatefulPartitionedCall/ | |
| | | | dense/StatefulPartitionedCall/re_lu/Relu:0 |
| 4 | 5 | StatefulPartitionedCall/StatefulPartitionedCall/ | |
| | | | dense_1/StatefulPartitionedCall/MatMul:0 |
| 5 | 6 | StatefulPartitionedCall/StatefulPartitionedCall/ | |
| | | | dense_1/StatefulPartitionedCall/BiasAdd:0 |
| 6 | 7 | StatefulPartitionedCall/StatefulPartitionedCall/ | |
| | | | dense_1/StatefulPartitionedCall/re_lu/Relu:0 |
| 7 | 8 | StatefulPartitionedCall/StatefulPartitionedCall/ | |
| | | | dense_2/StatefulPartitionedCall/MatMul:0 |
| 8 | 9 | StatefulPartitionedCall/StatefulPartitioned_Call/ | |
| | | | dense_2/StatefulPartitionedCall/BiasAdd:0 |
| 9 | 10 | StatefulPartitionedCall/StatefulPartitionedCall/ | |
| | | | dense_2/StatefulPartitionedCall/re_lu/Relu:0 |
| 10 | 11 | StatefulPartitionedCall/StatefulPartitionedCall/ | |
| | | | dense_3/StatefulPartitionedCall/MatMul:0 |
| 11 | 12 | StatefulPartitionedCall/StatefulPartitionedCall/ | |
| | | | dense_3/StatefulPartitionedCall/BiasAdd:0 |
| 12 | 13 | StatefulPartitionedCall/StatefulPartitioned Call/ | |
| | | | dense_3/StatefulPartitionedCall/re_lu/Relu:0 |
| 13 | 14 | StatefulPartitionedCall/StatefulPartitionedCall/ | |
| | | | dense_4/StatefulPartitionedCall/MatMul:0 |
| 14 | 15 | StatefulPartitionedCall/StatefulPartitionedCall/ | |
| | | | dense_4/StatefulPartitionedCall/BiasAdd:0 |
| 15 | 16 | StatefulPartitionedCall/StatefulPartitionedCall/ | |
| | | | dense_4/StatefulPartitionedCall/re_lu/Relu:0 |
| 16 | 17 | StatefulPartitionedCall/StatefulPartitionedCall/ | |
| | | | tf_op_layer_concat/PartitionedCall/concat:0 |
| 17 | 18 | StatefulPartitionedCall/StatefulPartitionedCall/ | |
| | | | dense_5/StatefulPartitionedCall/MatMul:0 |
| 18 | 19 | StatefulPartitionedCall/StatefulPartitionedCall/ | |
| | | | dense_5/StatefulPartitionedCall/BiasAdd:0 |
| 19 | 20 | StatefulPartitionedCall/StatefulPartitionedCall/ | |
| | | | dense_5/StatefulPartitionedCall/re_lu/Relu:0 |
| 20 | 21 | StatefulPartitionedCall/StatefulPartitionedCall/ | |
| | | | dense_6/StatefulPartitionedCall/MatMul:0 |
| 21 | 22 | StatefulPartitionedCall/StatefulPartitionedCall/ | |
| | | | dense_6/StatefulPartitionedCall/BiasAdd:0 |
| 22 | 23 | StatefulPartitionedCall/StatefulPartitionedCall/ | |
| | | | dense_6/StatefulPartitionedCall/re_lu/Relu:0 |
| 23 | 24 | StatefulPartitionedCall/StatefulPartitionedCall/ | |
| | | | dense_7/StatefulPartitionedCall/MatMul:0 |
| 24 | 25 | StatefulPartitionedCall/StatefulPartitionedCall/ | |
| | | | dense_7/StatefulPartitionedCall/BiasAdd:0 |
| 25 | 26 | StatefulPartitionedCall/StatefulPartitionedCall/ | |
| | | | dense_7/StatefulPartitionedCall/re_lu/Relu:0 |
| 26 | 27 | StatefulPartitionedCall/StatefulPartitionedCall/ | |
| | | | dense_8/StatefulPartitionedCall/MatMul:0 |
| 27 | 28 | StatefulPartitionedCall/StatefulPartitionedCall/ | |
| | | | dense_9/StatefulPartitionedCall/MatMul:O |
| 28 | 29 | StatefulPartitionedCall/StatefulPartitionedCall/ | |
| | | | dense_8/StatefulPartitionedCall/BiasAdd:0 |
| 29 | 30 | StatefulPartitionedCall/StatefulPartitionedCall/ | |
| | | | dense_9/StatefulPartitionedCall/BiasAdd:0 |
| 30 | 31 | StatefulPartitionedCall/StatefulPartitionedCall/ | |
| | | | tf_op_layer_concat_1/PartitionedCall/concat_1:0 |
| 31 | 32 | StatefulPartitionedCall/StatefulPartitionedCall/ | |
| | | | dense_10/StatefulPartitionedCall/MatMul:0 |
| 32 | 33 | StatefulPartitionedCall/StatefulPartitionedCall/ | |
| | | | dense_10/StatefulPartitionedCall/BiasAdd:O |
| 33 | 34 | StatefulPartitionedCall/StatefulPartitionedCall/ | |
| | | | dense_10/StatefulPartitionedCall/re_lu/Relu:0 |
| 34 | 35 | StatefulPartitionedCall/StatefulPartitionedCall/ | |
| | | | dense_11/StatefulPartitionedCall/MatMul:0 |
| 35 | 36 | StatefulPartitionedCall/StatefulPartitionedCall/ | |
| | | | dense_11/StatefulPartitionedCall/BiasAdd:0 |
| 36 | 37 | Identity:0 | |

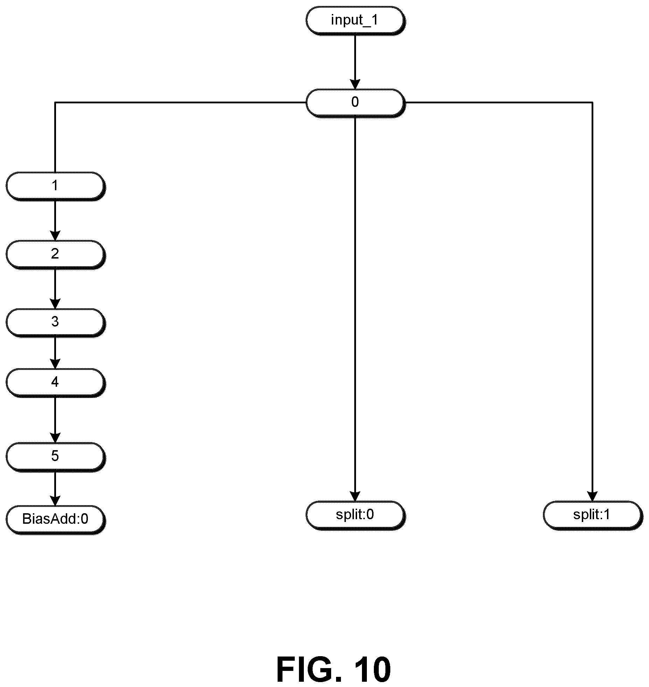

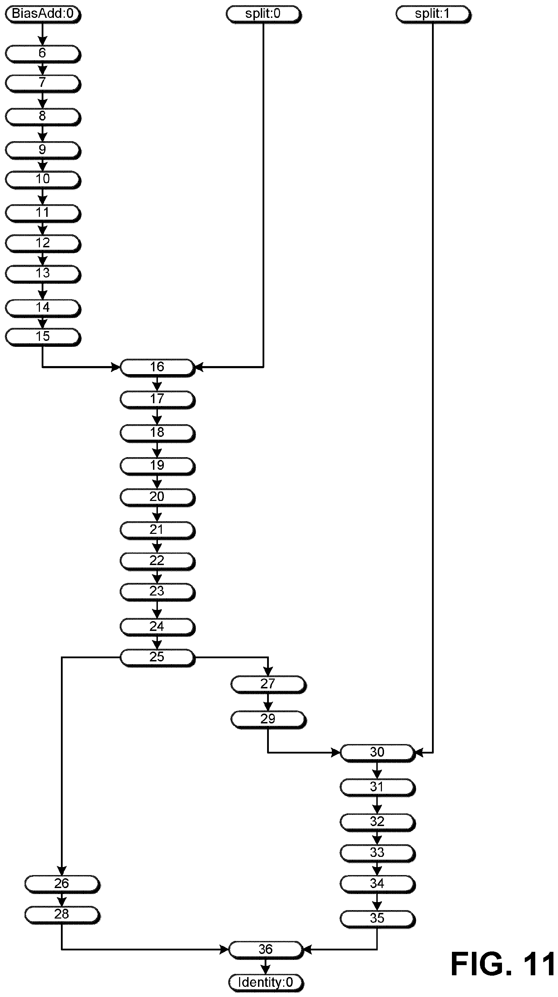

In a case where the model is split at the node with index 5, the resulting Submodel I is as illustrated in FIG. 10. In the illustration of FIG. 10, the nodes are identified by their node indices. Correspondingly, the resulting Submodel II is as illustrated in FIG. 11. In the illustration of FIG. 11, the nodes are identified by their node indices.

In the case as illustrated in FIGs. 10-111, where the model is split after the node with index 5, the intermediate tensors names to communicate from EndPoint1 to EndPoint2 are as follows:

```
 [
      'StatefulPartitionedCall/StatefulPartitionedCall/
                  dense_1/StatefulPartitionedCall/BiasAdd:0',
      'StatefulPartitionedCall/StatefulPartitionedCall/
                  tf_op_layer split/PartitionedCall/split:0',
      'StatefulPartitionedCall/StatefulPartitionedCall/
                  tf_op_layer_split/PartitionedCall/split:1'
 ]
```

**Tensor values sorted by tensor rank in the model.** In an example embodiment, only the tensor values are transmitted as intermediate data without transmission of tensor names. The tensors may be sorted according to the tensor's rank in the model.
For example, "v_BiasAdd_0" may be the value of the tensor 'StatefulPartitionedCall/StatefulPartitionedCall/dense_1/StatefulPartitionedCall/BiasAdd:0'
"v_split_0" may be the value of the tensor 'StatefulPartitionedCall/StatefulPartitionedCall/tf_op_layer_split/PartitionedCall/split:0',
"v_split 1" may be the value of the tensor 'StatefulPartitionedCall/StatefulPartitionedCall/tf_op_layer_split/PartitionedCall/split:1',
In this case, the rank "3" is associated with the tensor 'StatefulPartitionedCall/StatefulPartitionedCall/dense_1/StatefulPartitionedCall/BiasAdd:0'
The rank "0" is associated with the tensor 'StatefulPartitionedCall/StatefulPartitionedCall/tf op_layer split/PartitionedCall/split:0',
The rank "1" is associated with tensor StatefulPartitionedCall/StatefulPartitionedCall/tf_op_layer_split/PartitionedCall/split:1'

Thus, an ordered list of these tensors is as follows:

```
 [
      'StatefulPartitionedCall/StatefulPartitionedCall/
                 tf_op_layer split/PartitionedCall/split:0',
      'StatefulPartitionedCall/StatefulPartitionedCall/
                 tf_op_layer_split/PartitionedCall/split:1',
      'StatefulPartitionedCall/StatefulPartitionedCall/
                  dense_1/StatefulPartitionedCall/BiasAdd:0'
 ]
```

As a consequence, EndPoint1 will send the intermediate data following this order: [v_split_0, v_split_1, v_BiasAdd_0]

At the reception, EndPoint2 will do the same process to retrieve that the list of sorted tensors is

```
 [
      'StatefulPartitionedCall/StatefulPartitionedCall/
                 tf_op_layer split/PartitionedCall/split:0',
      'StatefulPartitionedCall/StatefulPartitionedCall/
                 tf_op_layer_split/PartitionedCall/split:1',
      'StatefulPartitionedCall/StatefulPartitionedCall/
                  dense_1/StatefulPartitionedCall/BiasAdd:0'
 ]
```

Each received tensor_value may then be associated with the proper tensor_name as follows.
v_split 0 is associated with 'StatefulPartitionedCall/StatefulPartitionedCall/tf_op_layer split/PartitionedCall/split:0'
v_split_1 is associated with 'StatefulPartitionedCall/StatefulPartitionedCall/tf_op_layer_split/PartitionedCall/split:1'
v_BiasAdd_0 is associated with 'StatefulPartitionedCall/StatefulPartitionedCall/dense_1/StatefulPartitionedCall/BiasAdd:0

**Tensor values sorted by alphabetical order of tensor names.** In the case of tensor values sorted by alphabetical order, the order of the example tensor names is as follows.

```
 [
      'StatefulPartitionedCall/StatefulPartitionedCall/
            dense_1/StatefulPartitionedCall/BiasAdd:0',
      'StatefulPartitionedCall/StatefulPartitionedCall/
            tf_op_layer split/PartitionedCall/split:0',
      'StatefulPartitionedCall/StatefulPartitionedCall/
            tf_op_layer_split/PartitionedCall/split:1'
 ]
```

As a consequence, EndPoint1 will send the intermediate data following this order: [v_BiasAdd_0, v_split 0, v_split_1]

At the reception, EndPoint2 will do the same process to determine that the list of sorted tensors is

```
 [
      'StatefulPartitionedCall/StatefulPartitionedCall/
            dense_1/StatefulPartitionedCall/BiasAdd:0',
      'StatefulPartitionedCall/StatefulPartitionedCall/
            tf_op_layer split/PartitionedCall/split:0',
      'StatefulPartitionedCall/StatefulPartitionedCall/
            tf_op_layer_split/PartitionedCall/split:1'
 ]
```

EndPoint2 will associate each received tensor_value with each tensor_name as follows.
v_BiasAdd_0 is associated with 'StatefulPartitionedCall/StatefulPartitionedCall/dense_1/StatefulPartitionedCall/BiasAdd:0
v_split 0 is associated with 'StatefulPartitionedCall/StatefulPartitionedCall/tf_op_layer split/PartitionedCall/split:0',
v_split_1 is associated with 'StatefulPartitionedCall/StatefulPartitionedCall/tf_op_layer_split/PartitionedCall/split:1'

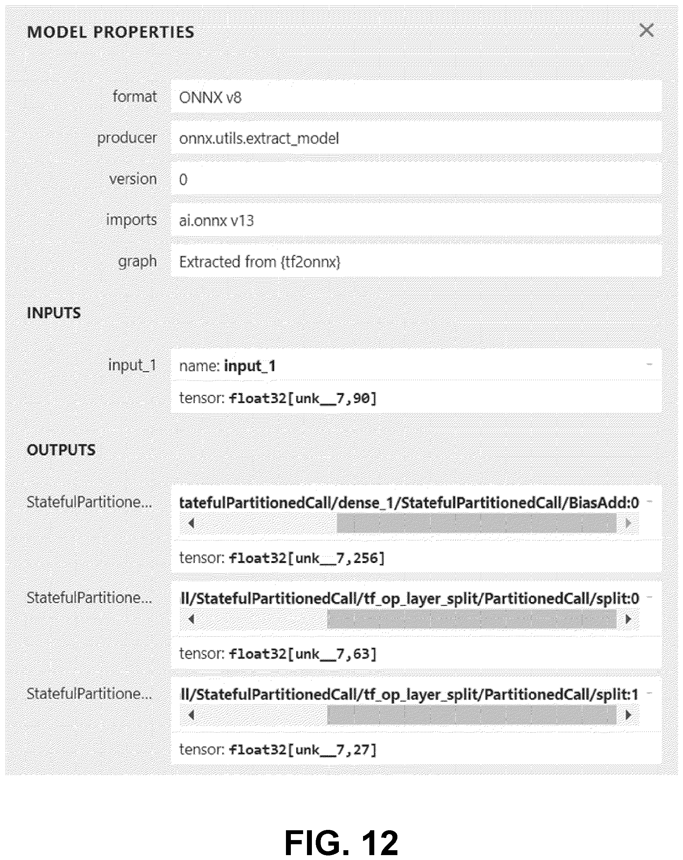

**Tensor values sorted by output order of sub-model part** I. In some embodiments, tensor values are sorted by the output order of the first sub-model. FIG. 12 illustrates an example of outputs of a sub-model part I.

In this case, order of tensor names is as follows.

```
 [
      'StatefulPartitionedCall/StatefulPartitionedCall/
            dense_1/StatefulPartitionedCall/BiasAdd:0',
      'StatefulPartitionedCall/StatefulPartitionedCall/
            tf_op_layer split/PartitionedCall/split:0',
      'StatefulPartitionedCall/StatefulPartitionedCall/
            tf_op_layer_split/PartitionedCall/split:1'
 ]
```

In this particular example, this is the same order as in the case of tensor values sorted by alphabetical order of tensor names, as described above, so the decoding may proceed as detailed above.

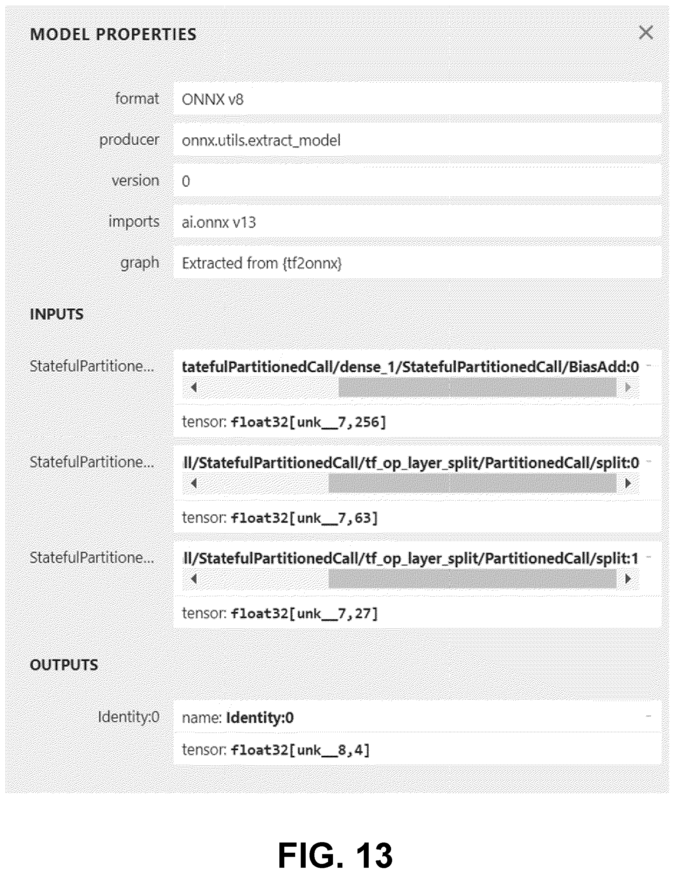

**Tensor values sorted by input order of sub-model part II.** In some embodiments, tensor values are sorted by the input order of sub-model part II. FIG. 13 illustrates the inputs of the second sub-model.

In this case, order of tensor names is as follows.

```
 [
      'StatefulPartitionedCall/StatefulPartitionedCall/
            dense_1/StatefulPartitionedCall/BiasAdd:0',
      'StatefulPartitionedCall/StatefulPartitionedCall/
            tf_op_layer split/PartitionedCall/split:0',
      'StatefulPartitionedCall/StatefulPartitionedCall/
            tf_op_layer_split/PartitionedCall/split:1'
 ]
```

In this particular example, this is the same order as in the case of tensor values sorted by alphabetical order of tensor names, as described above, so the decoding may proceed as detailed above.

### Implementations using 3GPP

In 3GPP SA4 26.927 v0.90, "Study on Artificial Intelligence (Al) and Machine Learning (ML) for Media," clause 6.6.4 provides a table describing intermediate data information for split AI/ML operations. Within that context, intermediate data information identifies the structure of intermediate data output from a first endpoint that need to be retrieved to feed the inference of the second endpoint after transmission of the intermediate data over the network. Example embodiments may be implemented by modifying the intermediate data information to include an intermediate data sorting method identifier as follows.

| **Metadata category** | **Metadata type** | | **Definition** | **Metadata type description (Examples)** |
|---|---|---|---|---|
| **Intermediat e data general information** | **Tensor structure framework** | | The exact underlying tensor structure of the intermediate data tensors including the exact version of it. | PyTorch 2.0, TensorFlow v2.13.0, NumPy v1 .25 |
| | **Data direction** | | This defines the direction of transmitted data, either uplink (from UE endpoint to network endpoint) or downlink (From a network endpoint to the UE endpoint). This information may be useful to configure an intermediate data delivery session | Upstream, Downstream |
| | **Global compression algorithm** | | Identifies a compression algorithm that can be applied to all the intermediate data tensors. For example, when the connectivity condition between the UE and the network is insufficient to transmit the original intermediate data, a compression algorithm may be applied. | NONE, FCM, SNAPPY, ... |
| | **intermediate data sorting method identifier** | | **Identify which method is used to sort intermediate data values** | **1 (alphabetical order of tensor names, see Table 1)** |
| **Intermediat e data tensor information** | **Tensor list** | | List of Tensors that composed the intermediate data | [tensor1, tensor2, tensor3, tensor4] |
| | | Tensor name | The name of the tensor | Tensor1 |
| | | Tensor shape | Tensor shape is a tuple of positive integers, where the size of the tuple represents the dimension of the tensor, and each value represents the size in each dimension. | [1,64,64,64]. |
| | | Tensor data type | The data type of each intermediate data tensor | Float32, int32 |
| | | Tensor compression algorithm | Identifies the compression algorithm(s) that can be applied to a particular tensor. The tensor compression algorithm supersedes the global compression algorithm when both are defined | NONE, FCM, SNAPPY, ... |

### Call flow

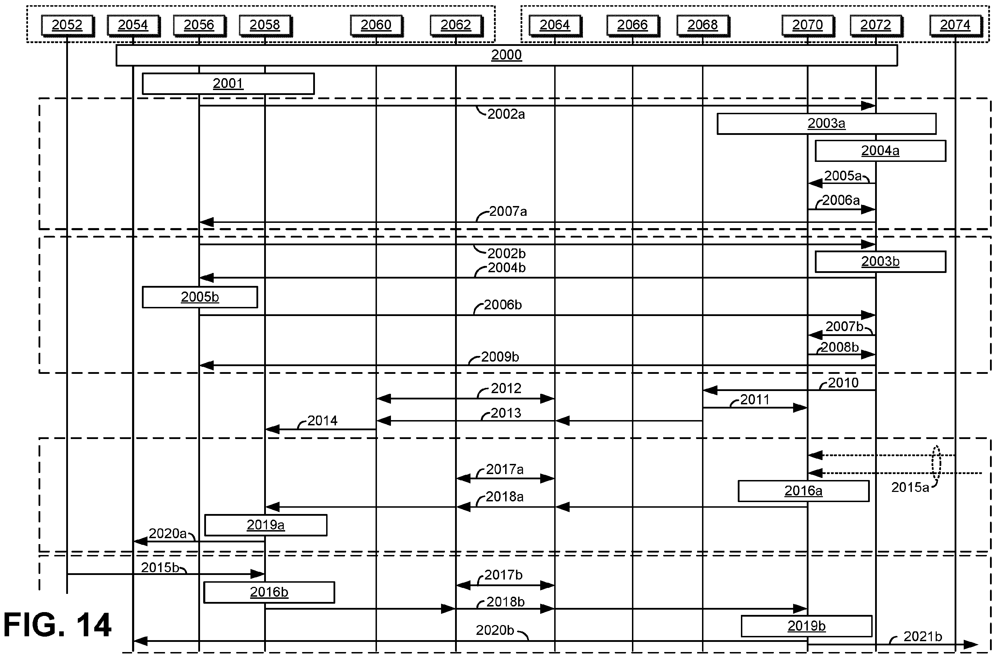

In 3GPP SA4 26.927 v0.90, Clause 5.2.3.2 describes basic workflows for split inferencing. An overview of the workflow is provided in the call flow diagram of FIG. 14. Some embodiments may be implemented using a 3GPP split inferencing call flow such as that illustrated in FIG. 14.

In FIG. 14, a UE has some or all of the following components: a UE data source 2052, a UE data destination 2054, a UE application 2056, an AI model inference engine 2058, an AI model access function 2060, and an intermediate data access function 2062. A network includes some or all of the following components: an intermediate data delivery function 2064, an AI model delivery function 2066, an AI model repository 2068, an AI model inference engine 2070, a network application 2072, and a data source 2074.

At 2000, session establishment is performed. In an AI split inference negotiation, at 2001, a UE's endpoint capability information is obtained.

In a case where the network decides on the AI model split, the split inference negotiation proceeds with steps 2002a-2007a. At 2002a, a split inference request is made. At 2003a, the network gets the UE's request information. At 2004a, the network selects the split AI model. At 2005a, the network application requests allocation of resources for AI inference, and at 2006a it receives a response. At 2007a, the AI split inference response is sent to the UE.

In a case where the network decides on the AI model split, the split inference negotiation proceeds with steps 2002b-2009b. At 2002b, the UE makes an AI model information request. At 2003b, an AI model is selected, and at 2004b, an AI model information response is provided to the UE. At 2005b, the UE selects a split AI model and at 2006b sends an AI split inference selection request to the network. At 2007b a request is made to allocate AI inference resources, and a response is received at 2008b. At 2009b, an AI split inference selection response is sent to the UE.

AI model subset delivery is performed in steps 2010-2014. At 2010, selected AI model subsets are identified. At 2011, the appropriate AI/ML subset is passed to the network for inferencing. At 2012, a UE AI model subset delivery session is established. At 2013, the appropriate AI/ML subset is delivered to the UE. At 2014, the UE's AI/ML model subset is passed to the UE's AI model inference engine for inferencing.

In a case where the data source for the AI inferencing is on the network, the AI split inferencing proceeds with steps 2015a through 2020a. At 2015a, the input media data is retrieved from the network or from a peer user. At 2016a, AI inferencing is performed on the first sub-model, and at 2018a, the resulting intermediate data is provided to the UE. At 2019a, the UE runs the second sub-model on the intermediate data, and at 2020a, it provides the inference output to the appropriate UE data destination.

In a case where the data source for the AI inferencing is in the UE, the AI split inferencing proceeds with steps 2015b through 2021b. At 2015b, the input media data is provided to the AI model inference engine of the UE. At 2016b, the UE runs the first sub-model on the input media data to obtain intermediate data. At 2017b, an intermediate data delivery session is established, and at 2018b, the intermediate data is delivered to the AI model inference engine on the network. At 2019b, the second sub-model is run on the intermediate data to obtain the final output of the model. The output is then delivered to the UE (at 2020b) or to another recipient (at 2021b).

Within this workflow, at 2006b, the UE application sends an AI split inference selection request to the network application with the selected split point configuration. In an example embodiment, this flow 2006b may be extended to carry information identifying the sorting algorithm.

Example embodiments as described herein enable two endpoints to transmit efficiently intermediate data tensor values with bandwidth gain.

### Example systems

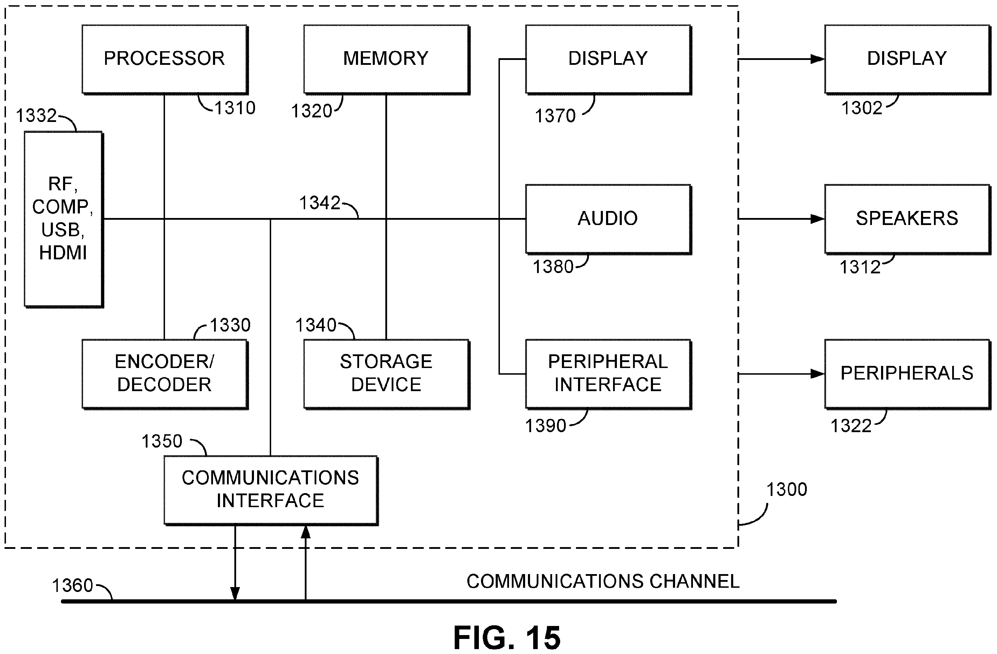

Some embodiments may be implemented on a system of one or more processors as illustrated in FIG. 15. FIG. 15 is a block diagram of an example of a system in which various aspects and embodiments are implemented. System 1300 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1300, singly or in combination, can be embodied in a single integrated circuit (IC), multiple ICs, and/or discrete components. For example, in at least one embodiment, the processing and encoder/decoder elements of system 1300 are distributed across multiple ICs and/or discrete components. In various embodiments, the system 1300 is communicatively coupled to one or more other systems, or other electronic devices, via, for example, a communications bus or through dedicated input and/or output ports. In various embodiments, the system 1300 is configured to implement one or more of the aspects described in this document.

The system 1300 includes at least one processor 1310 configured to execute instructions loaded therein for implementing, for example, the various aspects described in this document. Processor 1310 can include embedded memory, input output interface, and various other circuitries as known in the art. The system 1300 includes at least one memory 1320 (e.g., a volatile memory device, and/or a non-volatile memory device). System 1300 includes a storage device 1340, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1340 can include an internal storage device, an attached storage device (including detachable and non-detachable storage devices), and/or a network accessible storage device, as non-limiting examples.

System 1300 includes an encoder/decoder module 1330 configured, for example, to process data to provide an encoded video or decoded video, and the encoder/decoder module 1330 can include its own processor and memory. The encoder/decoder module 1330 represents module(s) that can be included in a device to perform the encoding and/or decoding functions. As is known, a device can include one or both of the encoding and decoding modules. Additionally, encoder/decoder module 1330 can be implemented as a separate element of system 1300 or can be incorporated within processor 1310 as a combination of hardware and software as known to those skilled in the art.

Program code to be loaded onto processor 1310 or encoder/decoder 1330 to perform the various aspects described in this document can be stored in storage device 1340 and subsequently loaded onto memory 1320 for execution by processor 1310. In accordance with various embodiments, one or more of processor 1310, memory 1320, storage device 1340, and encoder/decoder module 1330 can store one or more of various items during the performance of the processes described in this document. Such stored items can include, but are not limited to, the input point cloud, the decoded point cloud or portions of the decoded point cloud, the bitstream, matrices, variables, and intermediate or final results from the processing of equations, formulas, operations, and operational logic.

In some embodiments, memory inside of the processor 1310 and/or the encoder/decoder module 1330 is used to store instructions and to provide working memory for processing that is needed during encoding or decoding. In other embodiments, however, a memory external to the processing device (for example, the processing device can be either the processor 1310 or the encoder/decoder module 1330) is used for one or more of these functions. The external memory can be the memory 1320 and/or the storage device 1340, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1300 can be provided through various input devices as indicated in block 1332. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples include composite video.

In various embodiments, the input devices of block 1332 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1300 to other electronic devices across USB and/or HDMI connections. It is to be understood that various aspects of input processing, for example, Reed-Solomon error correction, can be implemented, for example, within a separate input processing IC or within processor 1310 as necessary. Similarly, aspects of USB or HDMI interface processing can be implemented within separate interface ICs or within processor 1310 as necessary. The demodulated, error corrected, and demultiplexed stream is provided to various processing elements, including, for example, processor 1310, and encoder/decoder 1330 operating in combination with the memory and storage elements to process the datastream as necessary for presentation on an output device.

Various elements of system 1300 can be provided within an integrated housing, Within the integrated housing, the various elements can be interconnected and transmit data therebetween using suitable connection arrangement 1342, for example, an internal bus as known in the art, including the Inter-IC (I2C) bus, wiring, and printed circuit boards.

The system 1300 includes communication interface 1350 that enables communication with other devices via communication channel 1360. The communication interface 1350 can include, but is not limited to, a transceiver configured to transmit and to receive data over communication channel 1360. The communication interface 1350 can include, but is not limited to, a modem or network card and the communication channel 1360 can be implemented, for example, within a wired and/or a wireless medium.

Data is streamed, or otherwise provided, to the system 1300, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1360 and the communications interface 1350 which are adapted for Wi-Fi communications. The communications channel 1360 of these embodiments is typically connected to an access point or router that provides access to external networks including the Internet for allowing streaming applications and other over-the-top communications. Other embodiments provide streamed data to the system 1300 using a set-top box that delivers the data over the HDMI connection of the input block 1332. Still other embodiments provide streamed data to the system 1300 using the RF connection of the input block 1332. As indicated above, various embodiments provide data in a non-streaming manner. Additionally, various embodiments use wireless networks other than Wi-Fi, for example a cellular network or a Bluetooth network.

The system 1300 can provide an output signal to various output devices, including a display 1302, speakers 1312, and other peripheral devices 1322. The display 1302 of various embodiments includes one or more of, for example, a touchscreen display, an organic light-emitting diode (OLED) display, a curved display, and/or a foldable display. The display 1302 can be for a television, a tablet, a laptop, a cell phone (mobile phone), or other device. The display 1302 can also be integrated with other components (for example, as in a smart phone), or separate (for example, an external monitor for a laptop). The other peripheral devices 1322 include, in various examples of embodiments, one or more of a stand-alone digital video disc (or digital versatile disc) (DVR, for both terms), a disk player, a stereo system, and/or a lighting system. Various embodiments use one or more peripheral devices 1322 that provide a function based on the output of the system 1300. For example, a disk player performs the function of playing the output of the system 1300.

In various embodiments, control signals are communicated between the system 1300 and the display 1302, speakers 1312, or other peripheral devices 1322 using signaling such as AV.Link, Consumer Electronics Control (CEC), or other communications protocols that enable device-to-device control with or without user intervention. The output devices can be communicatively coupled to system 1300 via dedicated connections through respective interfaces 1370, 1380, and 1390. Alternatively, the output devices can be connected to system 1300 using the communications channel 1360 via the communications interface 1350. The display 1302 and speakers 1312 can be integrated in a single unit with the other components of system 1300 in an electronic device such as, for example, a television. In various embodiments, the display interface 1370 includes a display driver, such as, for example, a timing controller (T Con) chip.

The display 1302 and speaker 1312 can alternatively be separate from one or more of the other components, for example, if the RF portion of input 1332 is part of a separate set-top box. In various embodiments in which the display 1302 and speakers 1312 are external components, the output signal can be provided via dedicated output connections, including, for example, HDMI ports, USB ports, or COMP outputs.

The embodiments can be carried out by computer software implemented by the processor 1310 or by hardware, or by a combination of hardware and software. As a non-limiting example, the embodiments can be implemented by one or more integrated circuits. The memory 1320 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1310 can be of any type appropriate to the technical environment, and can encompass one or more of microprocessors, general purpose computers, special purpose computers, and processors based on a multi-core architecture, as non-limiting examples.

### Further embodiments

A method according to some embodiments comprises: at a first endpoint, obtaining information describing at least a first sub-model of a split-inferencing machine learning model; in communication with a second endpoint, selecting a tensor sorting algorithm from among a plurality of available tensor sorting algorithms; running the first sub-model to obtain a plurality of tensors; and sending the plurality of tensors to the second endpoint, wherein the plurality of tensors are sent in an order determined by the selected tensor sorting algorithm.

An apparatus according to some embodiments comprises one or more processors configured to perform at least: at a first endpoint, obtaining information describing at least a first sub-model of a split-inferencing machine learning model; in communication with a second endpoint, selecting a tensor sorting algorithm from among a plurality of available tensor sorting algorithms; running the first sub-model to obtain a plurality of tensors; and sending the plurality of tensors to the second endpoint, wherein the plurality of tensors are sent in an order determined by the selected tensor sorting algorithm.

In some embodiments, the first endpoint does not send names for the plurality of tensors to the second endpoint.

Some embodiments further include, in communication with the second endpoint, selecting a table of tensor sorting algorithms from among a plurality of available tables, wherein the selection of a tensor sorting algorithm comprises selecting the tensor sorting algorithm from the selected table.

In some embodiments, selecting a tensor sorting algorithm comprises sending or receiving a sorting method identifier.

In some embodiments, the selected tensor sorting algorithm comprises sorting the tensors according to ranks of the tensors within the machine learning model.

In some embodiments, the selected tensor sorting algorithm comprises sorting the tensors according to an alphabetical order of tensor names.

In some embodiments, the selected tensor sorting algorithm comprises sorting the tensors according to an order of outputs of the first sub-model.

In some embodiments, the machine learning model further comprises a second sub-model, and wherein the selected tensor sorting algorithm comprises sorting the tensors according to an order of inputs of the second sub-model.

A method according to some embodiments comprises: at a second endpoint, obtaining information describing at least a second sub-model of a split-inferencing machine learning model; in communication with a first endpoint, selecting a tensor sorting algorithm from among a plurality of available tensor sorting algorithms; receiving a plurality of tensors from the first endpoint, wherein the plurality of tensors are received in an order determined by the selected tensor sorting algorithm; and running the second sub-model on the plurality of tensors.

An apparatus according to some embodiments comprises one or more processors configure to perform at least: at a second endpoint, obtaining information describing at least a second sub-model of a split-inferencing machine learning model; in communication with a first endpoint, selecting a tensor sorting algorithm from among a plurality of available tensor sorting algorithms; receiving a plurality of tensors from the first endpoint, wherein the plurality of tensors are received in an order determined by the selected tensor sorting algorithm; and running the second sub-model on the plurality of tensors.

In some embodiments, names for the plurality of tensors are not received from the first endpoint.

Some embodiments further include, in communication with the second endpoint, selecting a table of tensor sorting algorithms from among a plurality of available tables, wherein the selection of a tensor sorting algorithm comprises selecting the tensor sorting algorithm from the selected table.

In some embodiments, selecting a tensor sorting algorithm comprises sending or receiving a sorting method identifier.

In some embodiments, the selected tensor sorting algorithm comprises sorting the tensors according to ranks of the tensors within the machine learning model.

In some embodiments, the selected tensor sorting algorithm comprises sorting the tensors according to an alphabetical order of tensor names.

In some embodiments, the machine learning model further comprises a second sub-model, and the selected tensor sorting algorithm comprises sorting the tensors according to an order of outputs of the first sub-model.

In some embodiments, the selected tensor sorting algorithm comprises sorting the tensors according to an order of inputs of the second sub-model.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:
at a first endpoint, obtaining information describing at least a first sub-model of a split-inferencing machine learning model;
in communication with a second endpoint, selecting a tensor sorting algorithm from among a plurality of available tensor sorting algorithms;
running the first sub-model to obtain a plurality of tensors; and
sending the plurality of tensors to the second endpoint, wherein the plurality of tensors are sent in an order determined by the selected tensor sorting algorithm.

2. An apparatus comprising one or more processors configured to perform at least:
at a first endpoint, obtaining information describing at least a first sub-model of a split-inferencing machine learning model;
in communication with a second endpoint, selecting a tensor sorting algorithm from among a plurality of available tensor sorting algorithms;
running the first sub-model to obtain a plurality of tensors; and
sending the plurality of tensors to the second endpoint, wherein the plurality of tensors are sent in an order determined by the selected tensor sorting algorithm.

3. The method of claim 1 or the apparatus of claim 2, wherein the first endpoint does not send names for the plurality of tensors to the second endpoint.

4. The method of claim 1, or claim 3 as it depends from claim 1, or the apparatus of claim 2, or claim 3 as it depends from claim 2, further comprising, in communication with the second endpoint, selecting a table of tensor sorting algorithms from among a plurality of available tables, wherein the selection of a tensor sorting algorithm comprises selecting the tensor sorting algorithm from the selected table.

5. The method of claim 1, or claims 3-4 as they depend from claim 1, or the apparatus of claim 2, or claims 3-4 as they depend from claim 2, wherein selecting a tensor sorting algorithm comprises sending or receiving a sorting method identifier.

6. The method of claim 1, or claims 3-5 as they depend from claim 1, or the apparatus of claim 2, or claims 3-5 as they depend from claim 2, wherein the selected tensor sorting algorithm comprises sorting the tensors according to ranks of the tensors within the machine learning model.

7. The method of claim 1, or claims 3-5 as they depend from claim 1, or the apparatus of claim 2, or claims 3-5 as they depend from claim 2, wherein the selected tensor sorting algorithm comprises sorting the tensors according to an alphabetical order of tensor names.

8. The method of claim 1, or claims 3-5 as they depend from claim 1, or the apparatus of claim 2, or claims 3-5 as they depend from claim 2, wherein the selected tensor sorting algorithm comprises sorting the tensors according to an order of outputs of the first sub-model.

9. The method of claim 1, or claims 3-5 as they depend from claim 1, or the apparatus of claim 2, or claims 3-5 as they depend from claim 2, wherein the machine learning model further comprises a second sub-model, and wherein the selected tensor sorting algorithm comprises sorting the tensors according to an order of inputs of the second sub-model.

10. A method comprising:
at a second endpoint, obtaining information describing at least a second sub-model of a split-inferencing machine learning model;
in communication with a first endpoint, selecting a tensor sorting algorithm from among a plurality of available tensor sorting algorithms;
receiving a plurality of tensors from the first endpoint, wherein the plurality of tensors are received in an order determined by the selected tensor sorting algorithm; and
running the second sub-model on the plurality of tensors.

11. An apparatus comprising one or more processors configure to perform at least:
at a second endpoint, obtaining information describing at least a second sub-model of a split-inferencing machine learning model;
in communication with a first endpoint, selecting a tensor sorting algorithm from among a plurality of available tensor sorting algorithms;
receiving a plurality of tensors from the first endpoint, wherein the plurality of tensors are received in an order determined by the selected tensor sorting algorithm; and
running the second sub-model on the plurality of tensors.

12. The method of claim 10, or the apparatus of claim 11, wherein names for the plurality of tensors are not received from the first endpoint.

13. The method of claim 10, or claim 12 as it depends from claim 10, or the apparatus of claim 11, or claim 12 as it depends from claim 11, further comprising, in communication with the second endpoint, selecting a table of tensor sorting algorithms from among a plurality of available tables, wherein the selection of a tensor sorting algorithm comprises selecting the tensor sorting algorithm from the selected table.

14. The method of claim 10, or claims 12-13 as they depend from claim 10, or the apparatus of claim 11, or claims 12-13 as they depend from claim 11, wherein selecting a tensor sorting algorithm comprises sending or receiving a sorting method identifier.

15. The method of claim 10, or claims 12-14 as they depend from claim 10, or the apparatus of claim 11, or claims 12-14 as they depend from claim 11, further comprising determining a name for each of the plurality of tensors, wherein the second sub-model is run according to the determined names.
